(19) Europäisches Patentamt / European Patent Office / Office européen des brevets

(11) **EP 3 274 569 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **16711204.4**

(22) Anmeldetag: **15.03.2016**

(51) Int Cl.:
*F01N 3/28* (2006.01)　　　*F01N 3/20* (2006.01)

(86) Internationale Anmeldenummer:
**PCT/EP2016/055572**

(87) Internationale Veröffentlichungsnummer:
**WO 2016/150769 (29.09.2016 Gazette 2016/39)**

(54) **MISCHVORRICHTUNG**

MIXING DEVICE

DISPOSITIF DE MÉLANGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2015 DE 102015104540**

(43) Veröffentlichungstag der Anmeldung:
**31.01.2018 Patentblatt 2018/05**

(73) Patentinhaber: **Tenneco GmbH**
**67840 Edenkoben (DE)**

(72) Erfinder:
• **INCLAN, Tobias**
**67160 Wissembourg (FR)**
• **ROGARD, Yves-Antoine**
**67160 Wissembourg (FR)**

(74) Vertreter: **STT Sozietät Thews & Thews**
**Augustaanlage 32**
**68165 Mannheim (DE)**

(56) Entgegenhaltungen:
EP-A1- 2 007 975　　　WO-A1-2015/018971
US-A1- 2010 005 790

**Beschreibung**

Die Erfindung bezieht sich auf eine Mischvorrichtung zum Integrieren in ein Abgasrohr einer Brennkraftmaschine und zum Durchmischen eines Abgasstroms T, die gebildet ist aus einem Gehäuse mit einer Rohrwand zur Führung des Abgases in einer Hauptströmungsrichtung H und aus einer Zwischenwand, die einen Strömungsquerschnitt Qs des Gehäuses zumindest teilweise begrenzt, sowie einem Mischrohr, wobei das Mischrohr im Bereich eines ersten Endes E1 eine Einspritzdüse für ein einzumischendes Additiv aufweist und im Bereich eines zweiten Endes E2 in der Zwischenwand aufgenommen ist, wobei zumindest zwischen der Einspritzdüse und der Zwischenwand eine Perforationszone mit einem Durchströmquerschnitt Qp vorgesehen ist, wobei die Zwischenwand und das Mischrohr das Gehäuse in einen Anströmsektor und einen Abströmsektor teilen, wobei mindestens 90 % des vom Anströmsektor zum Abströmsektor zu führenden Gases durch die Perforationszone leitbar sind.

Es ist bereits eine Mischvorrichtung zum Anschließen an ein Abgasrohr einer Brennkraftmaschine zum Durchmischen eines Abgasstroms aus der US 8,033,104 B2 bekannt. Diese weist eine Zwischenwand auf, an der ein zylindrisches Mischrohr mit einer Einspritzdüse endseitig mündet. Der Abgasstrom tritt auf der Luv-Seite der Zwischenwand über die Perforation in das Mischrohr ein und verlässt das Mischrohr gegenüberliegend zur Einspritzdüse auf der Lee-Seite der Zwischenwand.

Ferner ist eine Mischvorrichtung zum Anschließen an ein Abgasrohr einer Brennkraftmaschine zum Durchmischen eines Abgasstroms aus der US 2010/0263359 A1 bekannt. Diese weist ein zylindrisches Mischrohr mit einer Einspritzdüse und mit Perforation auf, welches das Abgasrohr in der Art einer Zwischenwand bis auf die Perforation sperrt. Der Abgasstrom tritt auf der Luv-Seite über die Perforation in das Mischrohr ein und verlässt das Mischrohr gegenüberliegend zur Einspritzdüse auf der Lee-Seite.

Aus der US 2015/0040537 A1 ist ein Mischrohr zum Integrieren in ein Abgasrohr bekannt, wobei das Mischrohr einen zylindrischen Abschnitt und einen daran anschließenden konischen Abschnitt aufweist. In beiden Abschnitten sind verschiedene Ausnehmungen und Öffnungen vorgesehen, durch die Abgas in das Mischrohr einströmt.

Der Erfindung liegt die Aufgabe zugrunde, eine Mischvorrichtung derart auszubilden und anzuordnen, dass ein verbessertes Mischverhalten gewährleistet wird.

Gelöst wird die Aufgabe erfindungsgemäß dadurch, dass nach dem Mischrohr ein keilförmiges Strömungsleitelement mit einem Leitbug vorgesehen ist, der über die Rohrwand und/oder die Zwischenwand hervorsteht und mittels dessen der Abgasstrom T in zwei Teilströme T1, T2 teilbar ist, wobei die Teilströme T1, T2 mit Bezug zu der Hauptströmungsrichtung H in eine gegensinnige Drallströmung bringbar sind. Hierbei wird ein erster Teilstrom T1 gegen den Uhrzeigersinn und ein zweiter Teilstrom T2 im Uhrzeigersinn umgelenkt, so dass eine bessere Durchmischung des Abgasstroms mit dem Additiv und ein verbessertes Zuströmen in ein nachfolgendes Substrat wie ein Katalysator oder ein Partikelfilter erreicht werden.

Vorteilhaft kann diesbezüglich sein, wenn das Mischrohr eine ovale Querschnittsform F mit einer einer Hauptachse nach verlaufenden Höhe h und mit einer einer Nebenachse nach verlaufenden Breite b aufweist, wobei die Hauptachse quer zu der Hauptströmungsrichtung H des Abgasstroms ausgerichtet ist mit h >= 1,2 b. Das An- und Einströmen in das Mischrohr wird durch Anwendung der breiteren Anströmfläche verbessert. Mit Ausnahme von kleineren Spülöffnungen innerhalb der Zwischenwand, vorzugsweise in der Nähe der Gehäusewand, muss der gesamte Abgasstrom durch das Mischrohr geführt werden.

Zudem kann es vorteilhaft sein, wenn für den Durchströmquerschnitt Qp der Perforationszone im Verhältnis zum Strömungsquerschnitt Qs des Gehäuses gilt:

0,05 Qs <= Qp <= 0,6 Qs oder 0,07 Qs <= Qp <= 0,5 Qs oder
0,08 Qs <= Qp <= 0,45 Qs. Somit wird den Anforderungen an minimale Strömungsverluste einerseits sowie an eine vorteilhafte Beschleunigung und Vermischung der Abgasströmung andererseits Rechnung getragen.

Gelöst wird die Aufgabe auch durch ein Abgasrohr mit einer integrierten Mischvorrichtung sowie einer Abgasanlage mit einem solchen Abgasrohr.

Weitere Vorteile und Einzelheiten der Erfindung sind in den Patentansprüchen und in der Beschreibung erläutert und in den Figuren dargestellt. Es zeigt:

Figur 1     eine Seitenansicht der Mischvorrichtung mit geöffnetem Gehäuse 2;

Figur 2     eine Schnittdarstellung A-A nach Fig. 1;

Figur 3     eine Prinzipskizze des Mischrohres von oben.

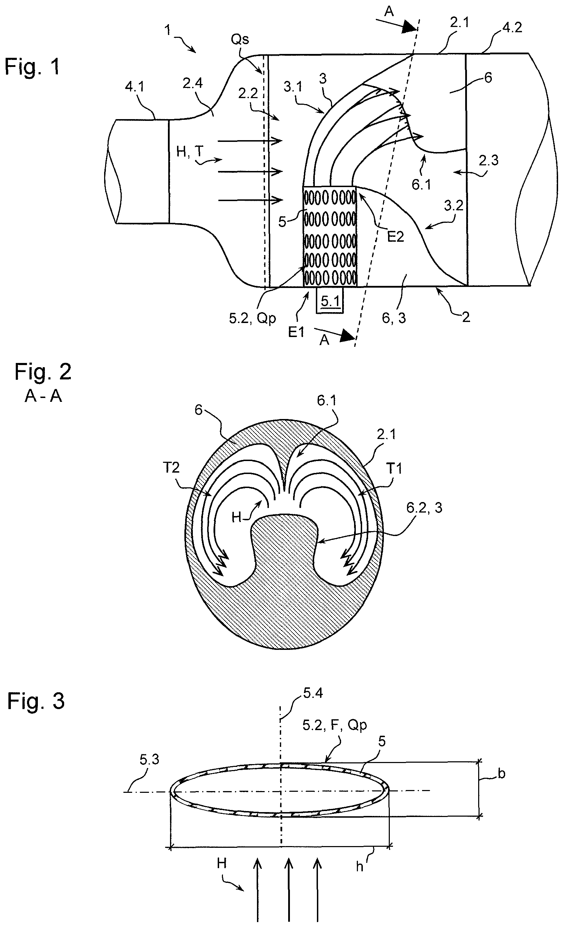

Eine in Fig. 1 dargestellte Mischvorrichtung 1 weist ein Gehäuse 2 mit einer Rohrwand 2.1 auf, innerhalb dessen ein Mischrohr 5 sowie ein Strömungsleitelement 6 angeordnet sind. Das Gehäuse 2 weist im Bereich der Eingangsöffnung einen integralen Rohradapter 2.4 auf, über den es an ein Abgasrohr 4.1 einer nicht weiter dargestellten Abgasanlage angeschlossen ist. Ebenso ist das Gehäuse 2 im Bereich der Auslassöffnung an ein nicht weiter dargestelltes Abgasnachbehandlungsgehäuse 4.2 eines Abgasbehandlungselementes angeschlossen.

Ein Abgasstrom T strömt über das Abgasrohr 4.1 in einer Hauptströmungsrichtung H in die Mischvorrichtung 1 bzw. das Gehäuse 2 ein und verlässt dieses endseitig zwecks Abströmung in das weitere Abgasnachbehandlungsgehäuse 4.2.

Innerhalb des Gehäuses 2 ist ein Mischrohr 5 vorgesehen, welches mit Bezug zur Hauptströmungsrichtung H in radialer Richtung in das Gehäuse 2 hineinragt. An das Mischrohr 5 schließt eine Zwischenwand 3 an, die einen Strömungsquerschnitt Qs des Gehäuses 2 teilweise verschließt. Der Abgasstrom T, der auf eine Luv-Seite 3.1 der Zwischenwand 3 und auf das Mischrohr 5 auftrifft, tritt somit über eine Perforationszone 5.2 des Mischrohres 5 in das Mischrohr 5 ein und tritt endseitig am Mischrohr 5 (hier nach oben hin) aus dem Mischrohr 5 aus. Auf einer Lee-Seite 3.2 der Zwischenwand 3 befindet sich ein Strömungsleitelement 6, über welches der aus dem Mischrohr 5 austretende Abgasstrom T in zwei Teilströme T1, T2 aufgeteilt wird.

In der Schnittdarstellung A-A gemäß Fig. 2 ist dargestellt, dass das Strömungsleitelement 6 einen Leitbug 6.1 aufweist, der (hier von oben) in radialer Richtung zum Gehäuse 2 in den Strömungsraum eintritt und einen im Uhrzeigersinn verlaufenden Teilstrom T1 sowie einen entgegen dem Uhrzeigersinn verlaufenden Teilstrom T2 des Abgasstroms T erzeugt. Das Strömungsleitelement 6 wird ergänzt durch einen Leitkörper 6.2, der mit Bezug zum Abgasstrom gegenüberliegend zum Leitbug 6.1 (hier im unteren Bereich) angeordnet ist und soweit den nierenförmigen Leitkanal der Mischvorrichtung 1 begrenzt. Die Zwischenwand 3 ist im unteren Bereich integraler Bestandteil des Strömungsleitelements 6.

Der Abgasstrom T tritt somit aufgeteilt in zwei gegensinnig gerichtete Teilströme T1, T2 in das weitere Abgasnachbehandlungsgehäuse 4.2 ein.

Gegenüberliegend zu einem Austrittsende bzw. einem zweiten Ende E2 des Mischrohres 5 ist im Bereich eines ersten Endes E1 eine Einspritzdüse 5.1 vorgesehen, über die das Additiv in das Innere des Mischrohres 5 zwecks Aufnahme über den Abgasstrom T eingegeben wird.

Nach Fig. 3 ist das Mischrohr 5 im Querschnitt oval ausgebildet, sodass ein mittlerer Anströmwinkel zwischen dem Abgasstrom T bzw. seiner Hauptströmungsrichtung H und der Mischrohrwand betreffend die Luv-Seite des Mischrohres 5 auf knapp 90° anwächst. Das Mischrohr 5 weist hierbei ein Verhältnis zwischen Höhe h und Breite b von etwa 1:4 auf.

Bezugszeichenliste

1      Mischvorrichtung
2      Gehäuse
2.1     Rohrwand
2.2     Anströmsektor
2.3     Abströmsektor
2.4     Rohradapter

3      Zwischenwand
3.1     Luv-Seite
3.2     Lee-Seite
4.1     Abgasrohr
4.2     Abgasrohr, Abgasnachbehandlungsgehäuse
5      Mischrohr
5.1     Einspritzdüse
5.2     Perforationszone
5.3     Hauptachse
5.4     Nebenachse
6      Strömungsleitelement
6.1     Leitbug
6.2     Leitkörper
b       Breite von 5
E1     erstes Ende
E2     zweites Ende
F       Querschnittsform von 5
H      Hauptströmungsrichtung
h       Höhe von 5
Qp     Durchströmquerschnitt von 5.2
Qs     Strömungsquerschnitt von 2
T       Abgasstrom
T1     Teilstrom vom Abgasstrom
T2     Teilstrom vom Abgasstrom

**Patentansprüche**

1.    Mischvorrichtung (1) zum Integrieren in ein Abgasrohr (4.1, 4.2) einer Brennkraftmaschine und zum Durchmischen eines Abgasstroms T, die gebildet ist aus einem Gehäuse (2) mit einer Rohrwand (2.1) zur Führung des Abgases in einer Hauptströmungsrichtung H und aus einer Zwischenwand (3), die einen Strömungsquerschnitt Qs des Gehäuses (2) zumindest teilweise begrenzt, sowie einem Mischrohr (5), wobei das Mischrohr (5) im Bereich eines ersten Endes E1 eine Einspritzdüse (5.1) für ein einzumischendes Additiv aufweist und im Bereich eines zweiten Endes E2 in der Zwischenwand (3) aufgenommen ist, wobei zumindest zwischen der Einspritzdüse (5.1) und der Zwischenwand (3) eine Perforationszone (5.2) mit einem Durchströmquerschnitt Qp vorgesehen ist, wobei die Zwischenwand (3) und das Mischrohr (5) das Gehäuse (2) in einen Anströmsektor (2.2) und einen Abströmsektor (2.3) teilen, wobei mindestens 90 % des vom Anströmsektor (2.2) zum Abströmsektor (2.3) zu führenden Gases durch die Perforationszone (5.2) leitbar sind, **dadurch gekennzeichnet,**
   **dass** nach dem Mischrohr (5) ein keilförmiges Strömungsleitelement (6) mit einem Leitbug (6.1) vorgesehen ist, der über die Rohrwand (2.1) und/oder die Zwischenwand (3) hervorsteht und mittels dessen der Abgasstrom T in zwei Teilströme T1, T2 teilbar ist, wobei die Teilströme T1, T2 mit Bezug zu der Hauptströmungsrichtung H in eine gegensinnige Drallströmung bringbar sind.

**2.** Mischvorrichtung (1) nach Patentanspruch 1, **dadurch gekennzeichnet, dass** das Mischrohr (5) eine ovale Querschnittsform F mit einer einer Hauptachse (5.3) nach verlaufenden Höhe h und mit einer einer Nebenachse (5.4) nach verlaufenden Breite b aufweist, wobei die Hauptachse (5.3) quer zu der Hauptströmungsrichtung H des Abgasstroms ausgerichtet ist mit

$$h >= 1{,}2\ b.$$

**3.** Mischvorrichtung (1) nach Patentanspruch 1 oder 2, **dadurch gekennzeichnet, dass** für den Durchströmquerschnitt Qp der Perforationszone (5.2) im Verhältnis zum Strömungsquerschnitt Qs des Gehäuses (2) gilt: 0,05 Qs <= Qp <= 0,6 Qs oder 0,07 Qs <= Qp <= 0,5 Qs oder 0,08 Qs <= Qp <= 0,45 Qs

**4.** Abgasrohr (4.1) mit einer integrierten Mischvorrichtung (1) nach einem der vorhergehenden Patentansprüche.

**5.** Abgasanlage mit einem Abgasrohr (4.1) nach Patentanspruch 4.

**Claims**

**1.** A mixing device (1) for integration into an exhaust gas pipe (4.1, 4.2) of a combustion engine and for mixing an exhaust gas flow T, which is formed from a housing (2) with a pipe wall (2.1) for guiding the exhaust gas in a main flow direction H and from an intermediate wall (3), which at least partially delimits a flow profile Qs of the housing (2), and a mixing pipe (5), wherein the mixing pipe (5) has an injection nozzle (5.1) in the region of a first end E1 for an additive to be mixed in, and in the region of a second end E2 is held in the intermediate wall (3), wherein at least between the injection nozzle (5.1) and the intermediate wall (3), a perforation zone (5.2) with a through-flow profile Qp is provided, wherein the intermediate wall (3) and the mixing pipe (5) divide the housing (2) into an inflow sector (2.2) and an outflow sector (2.3), wherein at least 90% of the gas to be transported from the inflow sector (2.2) to the outflow sector (2.3) can be guided through the perforation zone (5.2), **characterised in that** after the mixing pipe (5), a wedge-shaped flow guidance element (6) with a guiding nose (6.2) is provided, which protrudes over the pipe wall (2.1) and/or the intermediate wall (3), and by means of which the exhaust gas flow T is divisible into two partial flows, T1, T2, wherein the partial flows T1, T2 can be brought into a reverse swirling flow in relation to the main flow direction H.

**2.** The mixing device (1) according to patent claim 1, **characterised in that** the mixing pipe (5) has an oval profile form F with a height h that runs along a main axis (5.3) and with a breadth b that runs along a minor axis (5.4), wherein the main axis (5.3) is aligned transverse to the main flow direction H of the exhaust gas flow with h >= 1.2 b.

**3.** The mixing device (1) according to patent claim 1 or 2, **characterised in that** the following applies for the through-flow profile Qp of the perforation zone (5.2) in relation to the flow profile Qs of the housing (2): 0.05 Qs <= Qp <= 0.6 Qs or 0.07 Qs <= Qp <= 0.5 Qs or 0.08 Qs <= Qp <= 0.45 Qs

**4.** An exhaust gas pipe (4.1) with an integrated mixing device (1) according to any one of the preceding patent claims.

**5.** An exhaust gas facility with an exhaust gas pipe (4.1) according to patent claim 4.

**Revendications**

**1.** Dispositif de mélange (1) pour l'intégration dans un conduit d'échappement (4.1, 4.2) d'un moteur à combustion interne et pour le mélange d'un flux de gaz d'échappement T, lequel dispositif est formé d'un boîtier (2) avec une paroi de conduit (2.1) pour le guidage du gaz d'échappement dans une direction d'écoulement principale (H), et d'une paroi intermédiaire (3) qui délimite au moins partiellement une section transversale d'écoulement Qs du boîtier (2), ainsi que d'un tube de mélange (5), le tube de mélange (5) présentant dans la zone d'une première extrémité E1 une buse d'injection (5.1) pour un additif à mélanger et étant accueilli dans la zone d'une deuxième extrémité E2 dans la paroi intermédiaire (3), une zone perforée (5.2) avec une section d'écoulement Qp étant prévue au moins entre la buse d'injection (5.1) et la paroi intermédiaire (3), la paroi intermédiaire (3) et le tube de mélange (5) divisant le boîtier (2) en un secteur de flux d'entrée (2.2) et en un secteur de flux de sortie (2.3), au moins 90 % du gaz devant être amené du secteur de flux d'entrée (2.2) au secteur de flux de sortie (2.3) pouvant être guidés à travers la zone perforée (5.2), **caractérisé en ce qu'** un élément de guidage d'écoulement en forme de coin est prévu en aval du tube de mélange (5) avec un nez de guidage, lequel dépasse au-dessus de la paroi de conduit (2.1) et/ou de la paroi intermédiaire (3) et au moyen duquel le flux de gaz d'échappement T peut être divisé en deux flux partiels T1, T2, les flux partiels T1, T2 pouvant être amenés dans un écoulement tourbillonnaire opposé par rapport à la direction d'écoulement principale H.

2. Dispositif de mélange (1) selon la revendication 1, **caractérisé en ce que** le tube de mélange (5) présente une forme de section ovale F avec une hauteur h s'étendant dans le sens d'un axe principal (5.3) et avec une largeur b s'étendant dans le sens d'un axe secondaire (5.4), l'axe principal (5.3) étant orienté de façon transversale par rapport à la direction d'écoulement principale H du flux de gaz d'échappement, avec h >= 1,2 b.

3. Dispositif de mélange (1) selon la revendication 1 ou 2, **caractérisé en ce que**, pour la section de passage Qp de la zone perforée (5.2) par rapport à la section d'écoulement Qs du boîtier (2), 0,05 Qs <= Qp <= 0,6 Qs ou 0,07 Qs <= Qp <= 0,5 Qs ou 0,08 Qs <= Qp <= 0,45 Qs s'applique.

4. Conduit d'échappement (4.1) avec un dispositif de mélange (1) intégré selon l'une quelconque des revendications précédentes.

5. Dispositif de mélange avec un conduit d'échappement (4.1) selon la revendication 4.

**Fig. 1**

**Fig. 2**
A - A

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8033104 B2
- US 20100263359 A1
- US 20150040537 A1